# FASCICULE DE BREVET EUROPEEN

(11) **EP 0 369 883 B1**
(45) Date de publication et mention de la délivrance du brevet: **03.02.1993**
(21) Numéro de dépôt: 89403149.1
(22) Date de dépôt: 16.11.1989
(51) Int. Cl.: B23K 26/00

(54) **Dispositif de décapage de deux bords de tôle métallique à souder**
Blankmachvorrichtung der beiden zu verschweissenden Blechkanten
Device for cleaning both edges of a metallic sheet prior to welding

(30) Priorité: 17.11.1988 FR 8814933
(43) Date de publication de la demande: 23.05.1990
(73) Titulaire: CARNAUDMETALBOX, F-75017 Paris (FR)
(72) Inventeur: Riviere, Maurice, F-78390 Bois d'Arcy (FR); Barrou, Antoine, F-92350 Le Plessis Robinson (FR); Dauteuil, Daniel, F-10190 Estissac (FR)
(74) Mandataire: CABINET BONNET-THIRION

(56) Documents cités:
- EP-A- 0 027 707
- EP-A- 0 058 135
- FR-A- 2 300 632

## Description

L'invention se rapporte à un dispositif de décapage-soudage de deux bords rejoints d'une tôle métallique; elle concerne plus particulièrement la fabrication d'un corps de boîte cylindrique obtenu par roulage d'un flan de tôle rectangulaire et soudage de ses bords rejoints. L'invention facilite et améliore la soudure longidutinale lorsque la tôle roulée a déjà été imprimée et/ou vernie avant la formation du corps de boîte.

L'utilisation du faisceau laser pour la soudure est connu du document EP-A2-0058135 dans lequel les bords à souder sont guidés en déplacement. Par ailleurs, le document EP-A1-0027707 décrit un procédé de décapage au laser d'une tôle plane qui est ultérieurement cintrée puis soudée.

Dans la fabrication des corps de boîte métallique, on utilise couramment du fer blanc imprimé et/ou verni à plat, c'est-à-dire avant les opérations consistant à rouler chaque flan et à souder longitudinalement ses bords rejoints. Pour permettre une soudure correcte, on est obligé de prévoir des "réserves" (parties non imprimées ou vernies) le long des bords à souder pour que les surfaces nécessaires au soudage ne soient recouvertes d'aucun revêtement. Ces réserves longent les deux bordures à souder sur toute la hauteur du corps de boîte. Elles soulignent encore la présente de la soudure et nuisent à l'aspect esthétique de l'emballage. Dans le meilleur des cas, ces réserves ont une largeur variant ente 2,5 et 5mm.

L'invention permet d'éliminer totalement ces réserves, c'est-à-dire d'opérer à partir de flans imprimés ou vernis sur toute leur surface. Elle prévoit un décapage très localisé au voisinage des bords à souder de façon à mettre à nu la surface strictement nécessaire à la soudure longitudinale.

Dans cet esprit, l'invention concerne donc un dispositif de décapage-soudage de deux bords rejoints d'une tôle métallique pour former un corps de boîte, comportant un poste de soudage des moyens de guidage en amont dudit poste de soudage et munis de deux fentes dans lesquelles sont engagés lesdits bords, pour les maintenir sensiblement parallèles et côte à côte tout en faisant évoluer leur position relative tout au long du cheminement de ladite tôle et des moyens pour déplacer ladite tôle le long desdits moyens de guidage, caractérisé en ce qu'il comprend un poste de décapage desdits bords, agencé en amont dudit poste de soudage et comprenant:
- une source de rayonnement laser émettant un faisceau laser en direction d'un plan dans lequel lesdits bords sont asujettis à progresser sensiblement parallèlement et côte à côte, les deux fentes précitées débouchant en regard l'une de l'autre sensiblement dans ledit plan et dans une zone traversée par ledit faisceau focalisé, de sorte que lesdits moyens de guidage maintiennent les deux bords dans ce plan de part et d'autre d'un trajet rectiligne prédéterminé, au moins dans une zone dudit plan incluant une tache focale dudit faisceau, et
- des moyens de focalisation dudit faisceau laser pour le focaliser sensiblement dans ledit plan en déplaçant et/ou conformant ladite tache focale de façon à couvrir au moins transversalement par rapport audit trajet desdits bords, une distance égale à la largeur à décaper.

Selon un mode de réalisation possible, les moyens pour focaliser le faisceau sont agencés de façon classique pour produire une tache focale relativement ponctuelle, et par conséquent avec une concentration d'énergie importante et on prévoit en outre des moyens pour faire varier la position de ladite tache focale dans ledit plan, au moins transversalement par rapport audit trajet rectiligne.

Dans la pratique, les moyens de déviation du faisceau pourront être constitués par un miroir. Une légère oscillation de ce miroir permettra le balayage transversal de la tache focale, avec une grande précision de la largeur de décapage. Ce balayage pourra être obtenu en montant le miroir à l'extrémité d'un arbre rotatif entraîné par une turbine et en ajustant l'angle entre le miroir et l'axe de rotation de l'arbre.

Selon d'autres modes de réalisation possibles, les moyens pour focaliser le faisceau sont agencés pour produire une tache focale de configuration particulière, présentant transversalement par rapport au trajet des bords, une certaine largeur, correspondant à la largeur de la bande à décaper, tout en conservant une haute densité d'énergie, suffisante pour assurer le décapage. Parmi les formes de tache focale possibles, on retiendra particulièrement une forme rectiligne s'étendant transversalement audit trajet ou d'anneau.

L'invention sera mieux comprise et d'autres avantages de celle-ci apparaîtront plus clairement à la lumière de la description qui va suivre, d'un dispositif conforme à son principe, donnée à titre d'exemple et faite en référence aux dessins annexés dans lesquels:
- la figure 1 est une vue générale avec arrachement d'une machine à souder électrique, spécialisée dans la formation de corps de boîte cylindrique et incorporant un premier mode de réalisation d'un dispositif de décapage conforme à l'invention;
- la figure 2 est une vue schématique partielle à plus grande échelle du dispositif de décapage de la figure 1 illustrant le fonctionnement de ce dernier;
- les figures 3a, 3b et 3c sont des vues partielles en coupe des moyens de guidage du dispositif conforme à l'invention, illustrant l'évolution du profil de ces moyens de guidage, respectivement en amont de l'emplacement de décapage, à cet emplacement et au voisinage du poste de soudage;
- la figure 4 est une vue schématique partielle analogue à la figure 2 d'un second mode de réalisation d'un dispositif de décapage; et
- la figure 5 est une autre vue schématique partielle analogue à la figure 2, d'un troisième mode de réalisation d'un dispositif de décapage.

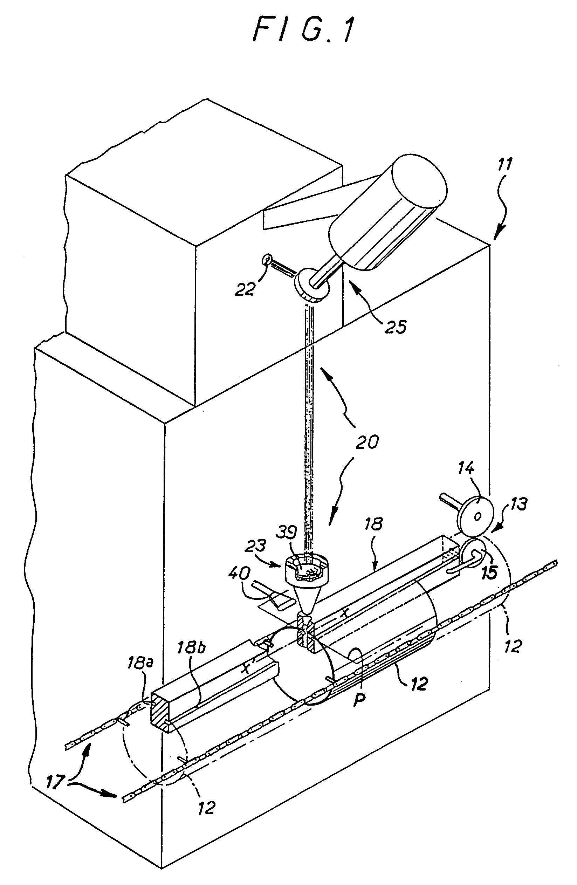

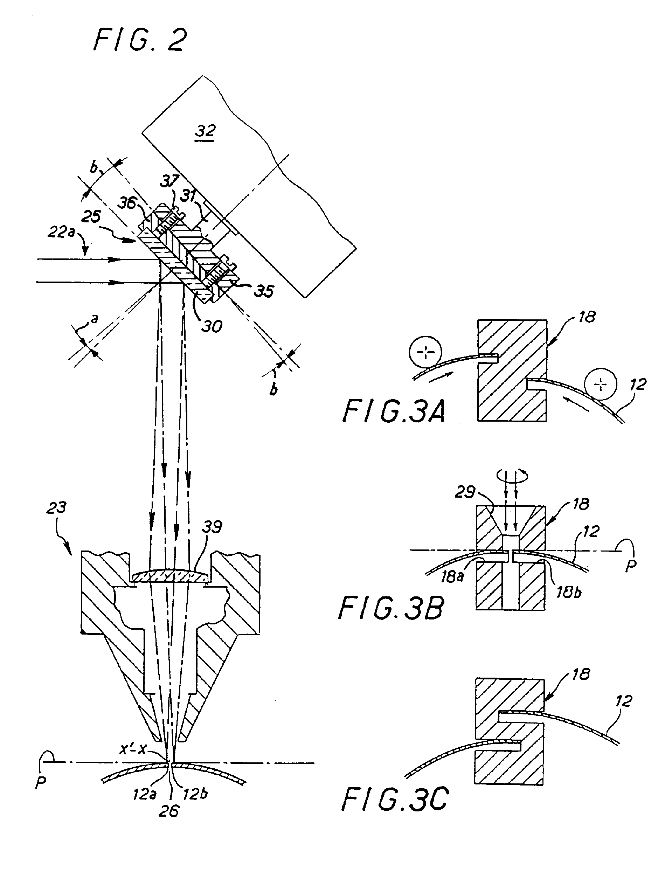

On a représenté une machine 11 de fabrication de corps de boîte. Cette machine est conçue pour souder électriquement deux bords rejoints d'un flan de tôle 12. Dans une telle machine, connue, le flan est rapidement roulé sur lui-même (de façon à former une virole) puis engagé dans un ensemble de barres en "Z" le mettant progressivement en position au fur et à mesure qu'il se déplace vers un poste de soudage électrique 13 comportant classiquement une électrode de soudage 14 en forme de molette et une contre-électrode 15, conçues pour faire passer un courant électrique de forte intensité entre les deux bords rejoints. Ceux-ci sont en contact par leurs champs ou en léger recouvrement. Comme mentionné précédemment, les flans sont imprimés avant d'être transformés en viroles. Dans le cas de l'invention, l'impression s'étend sur la totalité de la surface du flan; il n'y a donc pas de "réserve" le long des bords à souder. La face du flan qui est destinée à constituer la paroi interne du corps de boîte est, quant à elle, recouverte d'un vernis protecteur mais, celui-ci est appliqué de façon classique, avec des réserves le long des bords à souder, le décapage objet de l'invention ne concerne que la face imprimée extérieure et a pour but de faire disparaître le revêtement sur une largeur aussi faible que possible, c'est-à-dire réduite au strict nécessaire pour réaliser une soudure de bonne qualité. De façon classique, la machine représentée sur la figure 1 comporte, en amont du poste de soudage, des moyens pour rouler puis acheminer les flans vers ledit poste de soudage. Elle comprend donc des moyens pour déplacer les flans roulés, schématisés ici par deux chaînes d'amenage 17, munies de taquets d'entraînement. Elle comprend aussi des moyens de guidage comportant une barre 18 munie de deux fentes latérales 18a, 18b, opposées, de profondeur et hauteur variables (voir figure 3) d'une extrémité à l'autre de ladite barre. Les bords longitudinaux à souder sont engagés respectivement dans ces fentes et la virole en fin de formation est sollicitée élastiquement et radialement par des jeux de galets (non représentés) pour que les bords opposés du flan roulé soient engagés à fond dans ces fentes. Ainsi, au fur et à mesure de la progression du flan roulé le long de cette barre, sous l'action des chaînes 17, les bords à souder sont progressivement rapprochés avant d'être mis en léger recouvrement (figure 3c) au voisinage du poste de soudage où se réalise leur jonction. Une telle barre de guidage est connue dans son principe, mais les caractéristiques des fentes ont été modifiées pour les besoins de l'invention. Le rôle de ces moyens de guidage est donc de contrôler les positions relatives des deux bords à souder tout au long de leur cheminement conjoint vers ledit poste de soudage. En amont de celui-ci, se trouve agencé le dispositif de décapage 20 conforme à l'invention. Celui-ci comprend principalement une source de rayonnement laser 22, des moyens de focalisation 23 du faisceau laser 22a, agencés pour focaliser ledit faisceau sensiblement dans un plan P, ici avec une tache focale relativement ponctuelle et, associés aux moyens de focalisation dans ce mode de réalisation particulier, des moyens 25 pour faire varier la position de la tache focale 26 du faisceau dans le plan P. Ce dernier se situe au niveau de la barre de guidage 18, qui s'étend entre la zone d'activité du faisceau laser et le poste de soudage. Le dispositif de décapage est bien entendu complété par des éléments de structure de la machine à souder elle-même et notamment des moyens pour déplacer les bords à souder conjointement (en l'occurrence les bords opposés d'un flan roulé) constitués notamment ici par les chaînes d'amenage 17 et les moyens de guidage décrits ci-dessus. Plus précisément, le faisceau laser est dirigé vers la barre de guidage 18 et celle-ci est modifiée au voisinage de la trajectoire de ce faisceau pour maintenir les deux bords 12a, 12b du flan sensiblement parallèles, côte à côte et sensiblement dans le plan de focalisation P de part et d'autre d'un trajet rectiligne x′x, parallèle à la direction de cheminement du flan, c'est-à-dire à la barre 18. Autrement dit, les fentes 18a et 18b sont conformées pour que cet état de chose soit réalisé au moins dans une zone du plan P où la tache focale 26 est susceptible d'évoluer sous l'effet des moyens 25. Dans cette zone, la barre de guidage 18 comporte une ouverture supérieure 29 (voir figure 3b) pour le passage du faisceau et les deux fentes 18a, 18b se rejoignent sous cette ouverture de façon à placer les bords à souder dans le plan P. Les moyens 25 sont conçus pour faire varier la position de la tache focale au moins transversalement par rapport audit trajet rectiligne, en lui donnant un mouvement oscillant, de part et d'autre de ce trajet.

Comme le montre la figure 2, les moyens 25, pour faire varier la position de la tache focale, consistent en des moyens de déviation du faisceau (en l'occurrence un simple miroir plan 30) disposés entre la source de rayonnement laser 22 et les moyens de focalisation 23, ainsi que des moyens pour faire varier cette déviation, en l'occurrence ici un montage rotatif particulier du miroir 30. Plus précisément, le miroir est monté à l'extrémité d'un arbre rotatif 31 entraîné en rotation par une turbine 32. La direction de la normale au plan du miroir fait un angle a faible, avec l'axe de rotation de l'arbre. Le miroir est monté dans une coupelle 36 et des vis de réglage 37 sont prévues pour modifier l'inclinaison du miroir. Le miroir est monté sur une platine 35 prolongeant l'arbre rotatif 31, dont la face avant fait un angle b par rapport au plan perpendiculaire à l'axe de rotation. Le miroir est maintenu dans la coupelle 36, dont la face arrière présente le même angle b par rapport à la face avant du miroir, et qui vient en appui sur la face avant de la platine 35. Par rotation de la coupelle 36 sur la platine 35, l'angle a pourra être ajusté à volonté entre un angle nul et un angle maximum choisi. Un ensemble de vis de blocage permet de conserver le réglage, la platine 35 étant munie de lumières en arc de cercle.

Les moyens de focalisation comprennent essentiellement une lentille 39 placée dans le trajet optique entre le miroir et la barre de guidage.

Un exemple d'implantation est donné en figure 1, dans laquelle la source de rayonnement laser 22 est installée horizontalement à la partie supérieure de la machine à souder et l'arbre rotatif 31 fait un angle de 45° par rapport à la verticale. Un tube 40 situé au voisinage de la zone de décapage est relié à des moyens d'aspiration pour l'élimination des résidus de décapage.

En fonctionnement, l'inclinaison du miroir est choisie pour que le faisceau laser réfléchi fasse un angle 2a faible, par rapport à l'axe optique de la lentille 39. De cette façon, l'attaque de la lentille de focalisation se faisant avec cet angle 2a par rapport à cet axe optique, la tache focale se trouve en un foyer secondaire, décentré par rapport à l'axe optique. Par la rotation du miroir, la tache focale décrit un cercle autour de l'axe optique. Le diamètre de ce cercle dépend de l'angle a du miroir. Du fait que le flan roulé se déplace linéairement de telle façon que ses bords restent toujours de part et d'autre dudit trajet rectiligne, la tache focale décrit sur le corps de boîte une cycloïde dont la largeur est déterminée par l'inclinaison du miroir et dont le "pas" est fonction du rapport entre la vitesse linéaire de déplacement du corps de boîte et la vitesse de rotation du miroir. En ajustant tous ces paramètres en fonction de la puissance du laser, on peut décaper le métal sur une bande, de faible largeur, parallèle aux deux bords et incluant ces derniers. Par exemple, cette largeur n'excédera pas 2mm au total. Les barres de guidage sont réalisées de telle façon que les champs restent écartés de 0,3mm au moment du décapage, dans le plan P. Avec un décapage total de 2mm de largeur, chacun des bords sera décapé sur une distance n'excédant pas 1mm. Le recouvrement requis pour le soudage électrique étant de 0,4mm à 0,8mm, lesdits bords sont donc prêts à être soudés.

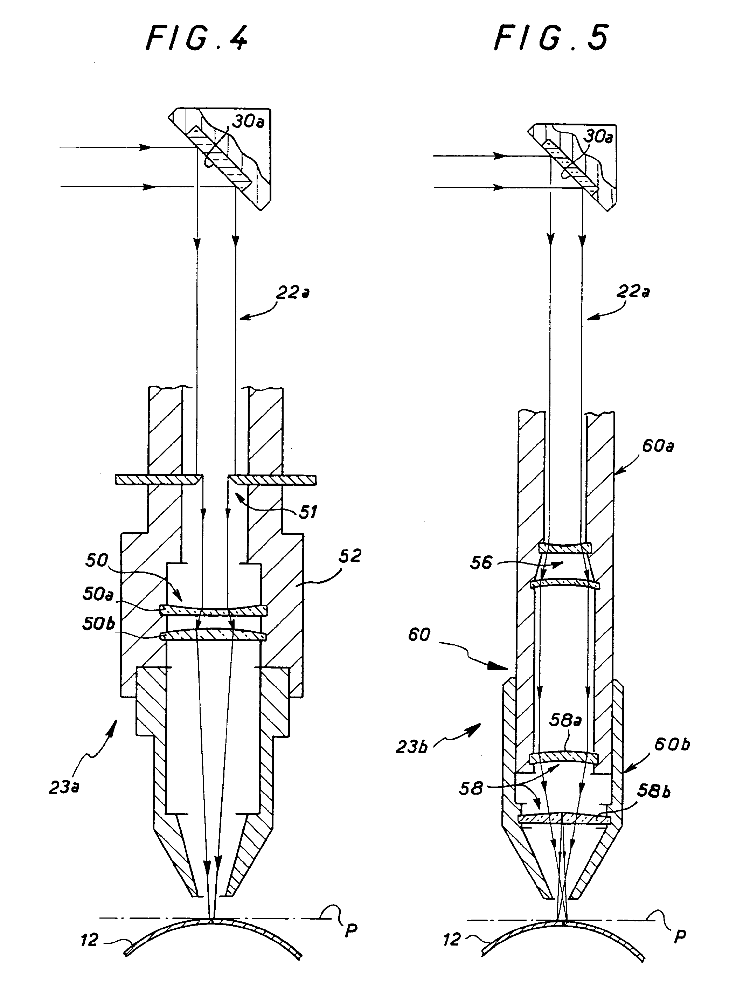

Sur les figures 4 et 5, les éléments de structure analogues portent les mêmes références numériques et ne seront pas décrits à nouveau. Ces deux modes de réalisation se distinguent du précédent par le fait que le miroir 30a est fixe, orienté à 45°, et ne sert qu'à réorienter le faisceau laser vers les moyens de focalisation 23a. Ceux-ci sont conçus pour que la tache focale dans le plan P ait une dimension transversale égale à la largeur à décaper, tout en conservant une haute densité d'énergie. Ainsi, dans l'exemple de la figure 4, ladite tache focale a sensiblement la forme d'un segment de droite de longueur égale à la largeur de la bande à décaper. Ceci est obtenu par un système de lentilles de focalisation 50 et un diaphragme 51 logés dans un corps d'objectif 52. Le système de lentilles 50 permet la focalisation d'un faisceau laser cylindrique selon un segment de droite. Dans l'exemple décrit il comporte une première lentille 50a cylindrique et une seconde lentille pour la focalisation 50b, classique, par exemple sphérique.

Si la répartition d'énergie du faisceau cylindrique est gaussienne, elle se retrouve le long du segment de droite de la tache focale. La qualité du décapage pourrait donc varier suivant la largeur de la bande. Le diaphragme 51 placé en amont du système de lentilles 50 par rapport au trajet du faisceau permet d'éviter cet inconvénient. Du fait que son ouverture est réglable, il permet aussi de régler la largeur de la zone décapée. Dans l'exemple, le diaphragme 51 est simplement constitué de deux lames diamétralement opposées par rapport à l'axe du faisceau, et déplaçables perpendiculairement à la bande à décaper.

Dans le mode de réalisation de la figure 5, on retrouve le même miroir 30a et des moyens de focalisation 23b conçus pour que la tache focale dans le plan P ait la forme d'un anneau. Ceci est obtenu par un système de lentilles d'expansion de faisceau 56 et un système de lentilles de focalisation en anneau 58 logés dans un corps d'objectif 60 en deux parties coaxiales, une partie fixe 60a et une partie mobile 60b à positionnement ajustable axialement. La partie fixe porte le système de lentilles 56 et une partie du système de lentilles 58, lequel est situé en aval du système de lentilles 56. La partie mobile 60b porte l'autre partie du système de lentilles 58.

Le diamètre de l'anneau de la tache focale, ajustable par le positionnement de ladite partie mobile 60b, est sensiblement égal à la largeur de la bande à décaper. Dans l'exemple décrit le système de lentilles 58 se compose principalement d'une lentille de focalisation 58a dans ladite partie fixe 60a du corps d'objectif et d'une lentille conique 58b assurant la conformation de la tache focale en anneau. Cette lentille conique est logée dans ladite partie mobile 60b, ce qui permet de régler le diamètre de l'anneau sans changer le plan de focalisation P. Un agencement de focalisation en anneau est à la portée de l'homme du métier. A titre d'exemple, un tel agencement a été décrit dans le document de brevet européen N°0 062 517.

Le système de lentilles d'expansion de faisceau 56 permet de diminuer l'"épaisseur" de l'anneau de focalisation et donc d'augmenter la concentration d'énergie sur l'anneau.

La répartition d'énergie est homogène le long de la circonférence de l'anneau, le décapage est donc de même qualité sur toute la largeur de la bande décapée. Le dispositif de la figure 4 présente cependant l'avantage d'une plus forte concentration d'énergie (environ trois fois plus) sur la largeur de la bande, toutes choses égales par ailleurs.

## Revendications

1. Dispositif de décapage-soudage de deux bords rejoints d'une tôle métallique pour former un corps de boîte, comportant un poste de soudage (13) des moyens de guidage (18) en amont dudit poste de soudage et munis de deux fentes dans lesquelles sont engagés lesdits bords, pour les maintenir sensiblement parallèles et côte à côte tout en faisant évoluer leur position relative tout au long du cheminement de ladite tôle et des moyens pour déplacer ladite tôle le long desdits moyens de guidage, caractérisé en ce qu'il comprend un poste de décapage desdits bords, agencé en amont dudit poste de soudage et comprenant:
- une source de rayonnement laser (22) émettant un faisceau laser en direction d'un plan (P) dans lequel lesdits bords sont asujettis à progresser sensiblement parallèlement et côte à côte, les deux fentes précitées débouchant en regard l'une de l'autre sensiblement dans ledit plan et dans une zone traversée par ledit faisceau focalisé, de sorte que lesdits moyens de guidage (18) maintiennent les deux bords dans ce plan (P) de part et d'autre d'un trajet rectiligne prédéterminé, au moins dans une zone dudit plan incluant une tache focale dudit faisceau, et
- des moyens de focalisation (23) dudit faisceau laser pour le focaliser sensiblement dans ledit plan en déplaçant et/ou conformant ladite tache focale de façon à couvrir au moins transversalement par rapport audit trajet desdits bords, une distance égale à la largeur à décaper.

2. Dispositif selon la revendication 1, caractérisé en ce qu'il comporte des moyens de déviation du faisceau (30) disposés entre ladite source de rayonnement et lesdits moyens de focalisation et des moyens (31, 32) pour faire varier cette déviation.

3. Dispositif selon la revendication 2, caractérisé en ce que les moyens de déviation du faisceau, entre ladite source de rayonnement et les moyens de focalisation, comportent un miroir (30).

4. Dispositif selon la revendication 3, caractérisé en ce que ledit miroir (30) est monté à l'extrémité d'un arbre rotatif (31) entraîné en rotation et en ce que la direction de la normale au plan du miroir fait un angle (-) faible avec l'axe de rotation de cet arbre.

5. Dispositif selon la revendication 4, caractérisé en ce que ledit arbre rotatif est celui d'une turbine (32).

6. Dispositif selon la revendication 1, caractérisé en ce que lesdits moyens de focalisation (32a) comportent un système de lentilles de focalisation engendrant une tache focale ayant la forme d'un segment de droite dans ledit plan (P).

7. Dispositif selon la revendication 6, caractérisé en ce que lesdits moyens de focalisation comportent un diaphragme (51).

8. Dispositif selon la revendication 1, caractérisé en ce que lesdits moyens de focalisation comportent un système de focalisation en anneau (58).

9. Dispositif selon la revendication 8, caractérisé en ce que lesdits moyens de focalisation comportent un système de lentilles d'expansion du faisceau (56).

10. Dispositif selon la revendication 1, caractérisé en ce que lesdits moyens de guidage comprennent une barre (18) dans laquelle sont pratiquées latéralement lesdites fentes (18a, 18b) et en ce que ladite barre s'étend au moins entre la zone d'activité du faisceau laser et l'emplacement où s'effectue la soudure.

11. Dispositif selon la revendication 10, caractérisé en ce que ladite barre comporte une ouverture supérieure (29) pour le passage du faisceau laser et en ce que les deux fentes 18a, 18b se rejoignent sous cette ouverture pour placer lesdits bords dans ledit plan (P).

## Claims

1. A device for cleaning/welding two adjoining edges of a metallic sheet to form the body of a can, comprising a welding station (13), means for guidance (18) which are upstream from the said welding station and are equipped with two slots in which the said edges are engaged to hold them substantially parallel and side by side whilst causing their relative position to change all along the path of movement of the said sheet, and means for moving the said sheet along the said means for guidance, characterized in that it comprises a station for cleaning the said edges formed upstream from the said welding station and comprising:
- a source of laser radiation (22) emitting a laser beam towards a plane (P) within which the said edges are forced to move forward substantially parallel to one another and side by side, the aforementioned slots opening opposite one another substantially in the said plane and in a zone through which the said beam passes focussed, so that the said means for guidance (18) hold the two edges in the plane (P) on either side of a predetermined rectilinear path, at least in a region of the said plane including a focal spot of the said beam, and
- means for focussing (23) the said laser beam in order to focus it substantially in the said plane by moving and/or shaping the said focal spot so as to cover, at least transversely relative to the said path of the said edges, a distance equal to the width to be cleaned.

2. A device according to claim 1, characterized in that it comprises means for deflecting the beam (30), disposed between the said source of radiation and the said means for focussing, and means (31, 32) for changing this deflection.

3. A device according to claim 2, characterized in that the means for deflecting the beam, located between the said source of radiation and the means for focussing, comprise a mirror (30).

4. A device according to claim 3, characterized in that the said mirror (30) is mounted at the end of a rotatable shaft (31) which is driven in rotation and in that the direction of the normal to the plane of the mirror (30) forms a small angle (a) with the axis of rotation of the said shaft.

5. A device according to claim 4, characterized in that the said rotatable shaft is the shaft of a turbine (32).

6. A device according to claim 1, characterized in that the said means for focussing (23a) comprise a system of focussing lenses which produce a focal spot having the shape of a segment of a line in the said plane (P).

7. A device according to claim 6, characterized in that the said means for focussing comprise a diaphragm (51).

8. A device according to claim 1, characterized in that the said means for focussing comprise a system for focussing in a ring (58).

9. A device according to claim 8, characterized in that the said means for focussing comprise a system of lenses for enlarging the beam (56).

10. A device according to claim 1, characterized in that the said means for guidance comprise a bar (18) in which the said slots (18a, 18b) are made laterally and in that the said bar extends at least between the region of action of the laser beam and the location where the welding is performed.

11. A device according to claim 10, characterized in that the said bar comprises an upper opening (29) for the laser beam to pass through, and in that the two slots (18a, 18b) meet below the said opening in order to position the said edges in the said plane (P).

## Patentansprüche

1. Vorrichtung zum Blankmachen und Verschweißen der beiden zusammengeführten Kanten eines Metallbleches zum Bilden eines Behälterrumpfes, welche eine Schweißstation (13) und vor dieser Schweißstation Führungsmittel (18) aufweist, die mit zwei Ausnehmungen versehen ist, in welche die genannten Kanten eingreifen, um genau parallel und Seite an Seite gehalten zu werden und um ihre relative Stellung über die Länge der Bahn der genannten Bleche sich entwickeln zu lassen, sowie mit Mitteln zum Verschieben des Bleches entlang der genannten Führungsmittel, **dadurch gekennzeichnet,** daß sie eine Station zum Blankmachen der genannten Kanten aufweist, welche vor der genannten Schweißstation angeordnet ist und umfaßt:
- eine Laserstrahlquelle (22), welche einen Laserstrahl in Richtung einer Ebene (P) aussendet, in der die genannten Kanten einer Bewegung genau parallel und Seite an Seite unterworfen sind, wobei die vorerwähnten Ausnehmungen in Bezug aufeinander genau in die genannte Ebene und in eine Zone münden, welche von dem gebündelten Strahl durchquert wird, in der Weise, daß die genannten Führungsmittel (18) die beiden Kanten in der Ebene (P) beiderseits einer vorbestimmten geradlinigen Bahn halten, und zwar mindestens innerhalb einer Zone der genannten Ebene, die einen gebündelten Fleck des Strahles enthält, und
- Mittel (23) zum Bündeln des genannten Laserstrahls, um diesen genau in der genannten Verschiebungsebene und/oder in Übereinstimmung mit dem genannten gebündelten Fleck zu bündeln, derart, daß der Fleck wenigstens quer zu den genannten Bahnen der Kanten eine gleiche Distanz von der blank zu machenden Breite bedeckt.

2. Vorrichtung nach Anspruch 1, **dadurch gekennzeichnet,** daß sie Mittel zum Ablenken des Strahles (30) aufweist, die zwischen der genannten Strahlenquelle und den genannten Bündelungsmitteln angeordnet sind, und daß sie Mittel (31, 32) aufweist, um die Ablenkung zu variieren.

3. Vorrichtung nach Anspruch 2, **dadurch gekennzeichnet,** daß die Mittel zum Ablenken des Strahls zwischen der genannten Strahlenquelle und den Bündelungsmitteln einen Spiegel (30) umfassen.

4. Vorrichtung nach Anspruch 3, **dadurch gekennzeichnet,** daß der genannten Spiegel (30) am äußeren Ende einer drehbaren Welle (31) montiert ist, die drehbar antreibbar ist, und daß die Richtung der Normale zur Ebene des Spiegels mit der Drehachse der Welle einen schwachen Winkel (a) bildet.

5. Vorrichtung nach Anspruch 4, **dadurch gekennzeichnet,** daß die genannte drehbare Welle die Welle einer Turbine (32) ist.

6. Vorrichtung nach Anspruch 1, **dadurch gekennzeichnet,** daß die genannte Bündelungsmittel (32a) ein Linsensytem zum Bündeln aufweist, welche einen fokalen Fleck erzeugen, der die Form eines rechteckförmigen Segments in der Ebene (P) bildet.

7. Vorrichtung nach Anspruch 6, **dadurch gekennzeichnet,** daß die genannten Fokusierungsmittel eine Blende (51) umfassen.

8. Vorrichtung nach Anspruch 1, **dadurch gekennzeichnet,** daß die genannten Bündelungsmittel ein ringförmig fokusierendes System (58) aufweisen.

9. Vorrichtung nach Anspruch 8, **dadurch gekennzeichnet,** daß die Fokusierungsmittel ein Linsensystem zum Zerstreuen des Strahles (56) umfassen.

10. Vorrichtung nach Anspruch 1, **dadurch gekennzeichnet,** daß die genannten Führungsmittel eine Stange (18) umfassen, an der seitlich die genannten Ausnehmungen (18a, 18b) ausgebildet sind und daß die genannte Stange sich wenigstens zwischen der aktiven Zone des Laserstrahls und der Selle erstreckt, an der die Verschweißung erfolgt.

11. Vorrichtung nach Anspruch 10, **dadurch gekennzeichnet,** daß die genannte Stange eine obere Öffnung (29) für den Durchgang des Lasertrahls aufweist und daß die beiden Ausnehmungen (18a, 18b) unter dieser Öffnung münden, um die genannten Kanten in die genannte Ebene (P) zu bringen.
